# EUROPEAN PATENT SPECIFICATION

(11) **EP 2 014 682 B1**
(45) Date of publication and mention of the grant of the patent: **23.07.2014**
(21) Application number: 07738632.4
(22) Date of filing: 15.03.2007
(51) Int. Cl.: A23L 1/0524, C08L 5/06, C08B 37/00

(54) **PROCESS FOR PRODUCTION OF PECTIN, AND GELLING AGENT AND GELATINOUS FOOD USING THE SAME**
VERFAHREN ZUR HERSTELLUNG VON PEKTIN, GELIERMITTEL UND GELATINÖSES LEBENSMITTEL UNTER VERWENDUNG DAVON
PROCÉDÉ DE PRODUCTION DE PECTINE, AGENT GÉLIFIANT ET ALIMENT GÉLATINEUX OBTENUS AU MOYEN DE CELLE-CI

(30) Priority: 17.03.2006 JP 2006074668
(43) Date of publication of application: 14.01.2009
(73) Proprietor: Fuji Oil Company, Ltd., Osaka-shi, Osaka 542-0086 (JP)
(72) Inventor: TOBE, Junko, Tsukubamirai-shi, Ibaraki 300-2436 (JP); NAKAMURA, Akihiro, Tsukubamirai-shi, Ibaraki 300-2436 (JP); TAKAHASHI, Taro, Izumisano-shi Osaka 598-8540 (JP)
(74) Representative: Boult Wade Tennant
(86) International application number: PCT/JP2007/055182
(87) International publication number: WO 2007/119366

(56) References cited:
- EP-A1- 1 069 138
- EP-A1- 1 291 363
- WO-A1-97/49298
- WO-A1-2006/126502
- DE-C- 745 044
- JP-A- 60 161 401
- JP-A- 2000 273 101
- TAKAMINE K ET AL: "Preparation of Pectin from Sweetpotato Residue and its Characterization//Ka nsho denpunlcasu kara pectin no chosei to sono seijo", OYO TOSHITSU KAGAKU - JOURNAL OF APPLIED GLYCOSCIENCE, NIHON OYO TOSHITSU KAGAKUKAI, TSUKUBA, JP, vol. 47, no. 2, 1 January 2000 (2000-01-01), pages 201-206, XP003003011, ISSN: 1340-3494
- TAKAMINE T. ET AL.: 'Kansho Denpunkasu kara Pectin no Chosei to Sono Seijo' JOURNAL OF APPLIED GLYCOSCIENCE vol. 47, no. 2, 2000, pages 201 - 206, XP003003011

## Description

The present invention relates to a process for producing a pectin, a gelling agent using the same and a gelatinous food using the same, and more particularly, to a process for producing a pectin obtaining from potato starch pulp (dregs), and a gelling agent having the resultant pectin as a main component, and a gelatinous food utilizing the gelling effect thereof, such as jam and jelly.

### Background Art

For producing a gelatinous food such as jam or jelly, a high molecular weight gelling agent such as gelatin, agar, high-methoxyl pectin (HM-pectin), low-methoxyl pectin (LM-pectin), carrageenan, guar gum, xanthan gum, gellan gum and sodium alginate, has conventionally been employed.

While carrageenan and sodium alginate are employed as gelling agents for foods and pharmaceuticals because of their ability of forming firm gels, the resultant gels tend to cause water separation. Also since their raw materials are natural sea weeds, they are extremely expensive and their solutions are highly viscous. On the other hand, gellan gum, which is a polysaccharide produced by *Pseudomonas elodea,* can constantly be supplied and can form a gel which is firmer than those formed from agar and carrageenan, however it has a problem to be expensive.

Pectin, which is extracted under strongly acidic conditions of pH 3 or lower from citrus or apple juice pomace, especially LM-pectin, has been utilized as a gelling agent for jam or dessert such as yogurt, however it has a limited range of use since it is softer than a gel obtained from carrageenan, sodium alginate or gellan gum.

Root crops, especially potatoes have been known for a long time to contain pectin together with starch, and subjected to various attempts to use as raw materials for producing pectin. In addition, they have been subjected also to attempt to use as gelling agents. In Patent Document 1, sunflower stems or potato starch pulp (dregs) are extracted under acidic pH conditions of pH 3 to 4.5 at 60 to 80°C or under alkaline pH conditions of pH 8 to 12 at 5 to 50°C, however, the amount of a pectin extracted is extremely low and poorly feasible. In addition, a hexametaphosphate added as a chelating agent is difficult to remove completely upon purification, and a residual chelating agent acts to suppress the gelling. Then, since the Example for producing gels requires excess calcium in an amount as large as 4 to 10% based on the pectin, the usage is restricted.

Recently, a process for obtaining pectin from potato starch pulp generated as a by-product during potato starch production was proposed (Patent Document 2). This process includes extraction of potato starch pulp (dregs) with hot water in the absence of a chelating agent at a weakly acidic pH of 3.8 to 5.3, and the resultant pectin has a function as a protein dispersion stabilizer, while it has no gelling property.
Patent Document 1: WO97/49298 A1
Patent Document 2: JP 2001-354702 A

### Disclosure of the Invention

### Means for solving a Problem

In the present invention, efficient utilization of starch pulp (dregs) disposed as industrial wastes is achieved by extracting and recovering useful components from potato starch pulp (dregs) using a highly feasible process. In addition, it is intended to invent a novel gelling agent and apply it to various food products.

### Means for Solving the Problem

The present inventors have intensively studied to solve the above-mentioned problem, and have found that pectin can efficiently be extracted from potato starch pulp (dregs) in the presence of a chelating agent by heating at 90°C or higher. In addition, they have also found that by employing an amylase treatment in combination, highly pure potato pectin can be obtained. Also by using a chelating agent which is readily dissociated under acidic conditions, it becomes possible to easily wash out the chelating agent remaining in the resultant pectin with a mineral acid-supplemented polar organic solvent, thus yielding further highly purified pectin. They have found that the pectin thus obtained is capable of forming a gel which is firmer and more excellent in gelling property and heating stability than those obtained by conventional LM-pectin or potato starch-derived pectin. The present invention has been completed on the basis of these findings.

Thus, the present invention is:
(1) A process for producing pectin comprising extracting it from potato starch pulp with a chelating agent at a temperature of 90°C to 125°C under such conditions that pH at the completion of the extraction is 5.5 to 11;
(2) The process for producing pectin according to the above (1), wherein a pH buffer is added when the extraction is carried out;
(3) The process for producing pectin according to the above (1) or (2), wherein starch derived from a raw material at the same time is degraded by an amylase treatment;
(4) A process for producing pectin, wherein purification is carried out by precipitating the pectin obtained by the process according to any one of the above (1) to (3) with a polar organic solvent;
(5) The process for producing pectin according to the above (4), wherein the extraction is carried out using a chelating agent exhibiting a potent chelating ability at pH 5 or higher and losing the chelating ability at pH 3 or lower, the resultant pectin is precipitated with a polar organic solvent, and the chelating agent is removed from the precipitate using a mineral acid-supplemented polar organic solvent;
(6) A gelling agent comprising the pectin obtained by the process according to any one of the above (1) to (5) as an active component;
(7) A gelatinous food obtained by using the gelling agent according to the above (6).

### Effect of the Invention

According to the present invention, potato pectin can efficiently be obtained as a gelling agent useful in a food industry from potato starch pulp (dregs).

### Best Mode for Carrying Out the Invention

Hereinafter, the present invention will be explained. As the potato starch pulp (dregs) in the present invention, any raw material can be used if it contains potato-derived cell wall polysaccharides, and it can also be used a residue after fermentation such as citric acid fermentation, although it is preferable potato starch pulp (dregs) generated as a by-product during a step for producing potato starch from various species of potatoes. Any forms of raw materials can be used, such as a fiber and compressed formed pulp. These raw materials are suspended in an aqueous solution containing a chelating agent to extract pectin.

The extracting temperature is 90°C or higher, and the extraction can also be carried out under pressure at a temperature exceeding 100°C. In addition, it is preferably 125°C or lower. Pectin obtained at a temperature below 90°C exhibits a poor extraction efficiency within a short period of time and an extremely high viscosity of a solution of the extract, which lead to a difficulty in solid-liquid separation of insolubles, resulting in a poor operability during the production. On the other hand, when it is extracted for a prolonged time at a high temperature exceeding 125°C, sometimes, a glycoside bond of galacturonic acid as a constituting of the pectin is eliminated and decomposed, thereby a sufficient gelling effect can not be obtained. While the extracting time is not limited particularly, it is appropriately 60 minutes to 180 minutes, and a shorter period of time is preferred at a higher extracting temperature.

The lower limit of the pH at the end of the heating extraction for extracting pectin is preferably pH 5.5 or higher. The upper limit of the pH during extraction is preferably at pH 11 or lower, more preferably at pH 10 or lower. When a pH at the end of the extraction is below pH 5.5, it leads to a lower extracting rate of the pectin and an insufficient elution of the pectin having a gelling effect. On the other hand, when a pH at the end of the extraction is higher, a glycoside bond of galacturonic acid as a constituent of the pectin is eliminated and decomposed, thereby a sufficient gelling effect is not obtained though pectin having a gelling effect is obtained.

While a chelating agent may finally be present as a residue in the resultant pectin, it possibly inhibits the gellation by an ionic bond via calcium, therefore it is preferable that the chelating agent added at the time of extraction is an amount as small as possible, or that the excess chelating agent is removed after the extraction. The amount of the chelating agent to be added is preferably 5 mmole or more, and more preferably 10 mmole or more, based on 50 g of the solid content of potato starch pulp (dregs). Although the upper limit can be 100 mmole or lower, it is preferably 50 mmole or lower so as to avoid the addition of a large amount of the chelating agent. The solid content of the raw material is usually in proportion with the added amount of the used chelating agent, and accordingly a thicker raw material requires higher concentration of the chelating agent.

Since a chelating agent itself has a pH buffering capacity, when an added amount of the chelating agent is reduced, the pH of the extract solution varies more remarkably depending on the extracting environment such as the types of the raw material, concentration, temperature and time period of extraction. Such a pH variation can effectively and preferably be inhibited by a method for the extraction using a chelating agent supplemented with a pH buffering agent. The pH buffering agent can typically include an acid such as carbonic acid, boric acid, tartaric acid, malic acid and adipic acid as well as salts thereof, and sodium hydrogen carbonate is especially preferred. While the amount to be added is not limited particularly, since it may vary depending on the type of the chelating agent and the extracting conditions, for example, it should be at least 10 mmole of sodium hydrogen carbonate as a buffering agent in the extracting solvent when extracting pectin using 10 mmole of trisodium citrate as a chelating agent in a extracting system whose solid content is 50 g. The concentration of pH buffering agent is also preferable to be raised or lowered similarly to the chelating agent depending on the raw material concentration. The pH can be adjusted further after addition of the chelating agent.

Coexisting starch may affect the gelling properties and the transparency of pectin in some cases. Accordingly, pectin having a higher purity and more excellent gelling performance can be obtained by removing starch coexisted. While the method for removing such starch is not limited particularly, it can be removed by cooling a pectin extract solution or addition of an emulsifier to make the starch insoluble, whereby accomplishing separation and removal. It is preferred especially a method for obtaining starch-free highly purified pectin to degrade the starch by an amylase treatment before or after the extraction, preferably after the extraction, more preferably after a solid-liquid separation. As an amylase, any commercially available enzyme which is free of a pectinase or a hemicellulase can be employed. While the pH during the amylase treatment is no matter if it is within the range of an optimum pH for the enzyme employed, it is preferably within the pH range same as that of the pectin solution after the extraction for inhibiting the thickening of the pectin during the step. When any proteins are coexisting, they can be treated with a protease. As a protease, any commercially available enzyme which is free of a pectinase or a hemicellulase can be employed. After this enzyme treatment, it is preferred to remove low molecular substances by a method described below.

The potato pectin of the present invention is recovered after separating and removing insolubles by centrifugation or filtration after the extraction. In the filtration, perlite, kieselguhr and cellulose can be used as a filter aid. While the extract solution removed and recovered from the suspension can be used as it is after drying, it is preferably to be further purified.

The purification can include separation and removal of coexisting proteins or colorants by treatment with an ion exchange resin, activated charcoal or hydrophobic resin, as well as removal of hydrophobic substances or low molecular substances by precipitation treatment with a polar organic solvent such as ethanol, acetone and isopropanol. However, some of the chelating agents cannot be removed only by these procedures.

Since the gelling ability may be affected adversely if the chelating agent used during the extraction remains in the potato pectin, the gelling ability can further be improved by removing the chelating agent in the pectin. While a method for removing the chelating agent includes such as an electric dialysis and an ion exchange resin, a method of above-mentioned precipitation with the polar organic solvent conducted under acidic conditions is preferred, and a method of washing the precipitations with a mineral acid-supplemented polar organic solvent after precipitating with the polar organic solvent is the most preferred. The acidic conditions refer to those of a pH approximately at the pKa value of an uronic acid or lower, and the mineral acid-supplemented polar organic solvent employed in washing means a polar organic solvent in which a mineral acid such as hydrochloric acid, sulfuric acid, nitric acid and phosphoric acid is added to the above mentioned polar organic solvent to achieve a pH at the pKa value of an uronic acid or lower, preferably pH 3 or lower, more preferably pH 2 or lower.

As the chelating agent employed in the present invention, among those utilizable in food products, a substance exhibiting a potent chelating ability at the range of pH 5 or higher and losing the chelating ability completely at pH 3 or lower is preferred in view of easy removal. As a chelating agent satisfying these requirements, free phosphoric acid and salts thereof, organic acids such as citric acid and tartaric acid and salts thereof are preferred, and they are superior to a substance maintaining its chelating ability even in the presence of an acid such as metaphosphoric acid or phytic acid. Moreover, disodium hydrogenphosphate and trisodium citrate are preferred especially from easiness of adjustment pH at the time of using and efficiency of removal.

By carrying out the removal of these chelating agents, pectin obtained finally has a high gelling ability with a reduced amount of the residual chelating agent. The resultant pectin can form a gel by reaction with an alkaline earth metal such as Ca and Mg. In such a case, by using a milk protein containing an alkaline earth metal such as a powdered skim milk, the gel formation reaction becomes slow, and it is possible to prepare a uniform gel having less unevenness of the texture, different from a case using an ordinary inorganic salt. The potato pectin has high gel strength, does not tend to cause melting or water separation with heating, and forms a gel with agar-like texture.

When measured by a gel filtration HPLC, the molecular weight distribution of the potato pectin extracted according to the present invention is estimated to be 5,000,000 to 5,000. The constituent sugars include galacturonic acid, rhamnose, galactose, arabinose, xylose and fucose. The molecular weight is calculated using a pullulan standard (manufactured by Showa Denko K.K., Standard Pullulan P-82), and the sugar composition was analyzed after decomposition with 2N TFA by the methods described in Bioscience, Biotechnology, and Biochemistry, 64,178-180(2000) and Biosci. Biotechnol. Biochem.,56, 1053-1057 (1992).

While the amount of the potato pectin used as a gelling agent is generally 0.05 to 10 % by weight, preferably 0.3 to 1 % by weight based on a final gelatinous food, it does not limit the scope of the present invention since it may vary depending on the mineral or protein concentration in a food.

For carrying out the present invention, the potato pectin can be used in combination with other stabilizers and gelling agents such as HM-pectin, CMC-Na, PGA, watersoluble soybean polysaccharide, locust bean gum, tamarind seed polysaccharide, gellan gum, native gellan gum, xanthan gum, guar gum, tara gum, fenugreek gum, gum arabic, karaya gum, carrageenan, chitosan, microcrystalline cellulose and agar.

In the gelatinous food of the present invention, emulsifiers and sweeteners can be used together, if necessary. Such an emulsifier can be any well known emulsifier, and specifically including sucrose fatty acid esters, glycerin fatty acid esters, sorbitan fatty acid esters, propylene glycol fatty acid esters, polyglycerol fatty acid esters or lecithin. The sweetener can also be any well known sweetener, and specifically including one, two or more kinds selected from sugars such as sucrose, glucose, fructose, isomerized sugars, starch syrup, trehalose, maltitol or sorbitol, aspartame, stevia, glycyrrhizin or thaumatin.

The gelatinous food is suitable for use requiring a relatively firm gel, and examples thereof include jam, marmalade, jelly, mousse, bavarois, pudding and artificial salmon roe.

### Examples

While the present invention is further described in detail by way of the following Examples, the present invention is not limited to these Examples. All "%" are on the basis of weight, and the yield is a % recovery as a weight on dried basis.

### (Production Examples A to E)

### Preparation Example of potato pectin (A) (without using chelating agent)

To 5 parts of dried potato starch pulp (dregs) was added 95 parts of water, and the mixture was adjusted at pH 4.5, and then subjected to heat extraction at 120°C for 60 minutes. After cooling the mixture, insolubles were separated and removed by centrifugation (10,000 x g, 30 minutes). The supernatant was adjusted at pH 5.0, and an amylase solution (AMG300L: Novozymes) corresponding to 1% relative to the starch was added to degrade the starch at 60°C for 3 hours, followed by heating in a boiling water bath for 10 minutes to inactivate the enzyme. Ethanol was added to a final concentration of 50% to precipitate pectin, and the precipitate was washed with 3-fold volume of 99% ethanol to purify the pectin. The yield of the potato pectin based on the raw material was 20%.

### Preparation Example of potato pectin (B) (without using chelating agent, demethoxylation)

A supernatant obtained similarly to the preparation of the potato pectin (A) was adjusted at pH 12 with sodium hydroxide, and then subjected to a demethoxylation at 50°C for 60 minutes. Thereafter, the starch was degraded at pH 5.0 similarly to the preparation of the potato pectin (A), and washed with ethanol to purify the pectin. The yield of the potato pectin based on the raw material was 18%.

### Preparation Example of potato pectin (C) (using chelating agent)

To 5 parts of dried potato starch pulp (dregs) was added 95 parts of a 53mM (final 50mM) aqueous solution of disodium hydrogenphosphate, and then the mixture was subjected to heat extraction at 120°C for 60 minutes. After cooling the mixture, insolubles were separated and removed by centrifugation (10,000 x g, 30 minutes). To the supernatant whose pH had not been adjusted, an amylase solution (BAN240L: Novozymes) corresponding to 1% relative to the starch was added to degrade the starch at 60°C for 3 hours, followed by heating in a boiling water bath for 10 minutes to inactivate the enzyme. Ethanol was added at a final concentration of 50% to precipitate pectin, and the precipitate was washed with 80% ethanol containing 3-fold volume of 1% hydrochloric acid to purify the pectin. It was adjusted at pH 6 with 80% ethanol containing 3-fold volume of 10% sodium hydroxide, followed by washing three times with 99% ethanol and drying to yield potato pectin (C). The yield of the potato pectin based on the raw material was 25%.

### Preparation Example of potato pectin (D) (using chelating agent)

A potato pectin (D) was obtained similarly to the preparation of potato pectin (C) except for extracting with 53mM (final 50mM) trisodium citrate instead of disodium hydrogenphosphate. The yield of the potato pectin based on the raw material was 24%.

### Preparation Example of potato pectin (E) (using pH buffering agent)

A potato pectin (E) was obtained similarly to the preparation of potato pectin (C) except for extracting with a 53mM (final 50mM) sodium hydrogen carbonate instead of disodium hydrogenphosphate. The yield of the potato pectin based on the raw material was 17%.

The results of the analysis of the potato pectin (A) to (E) and commercially available LM-pectin (GENU pectin type LM-104AS-J: manufactured by SANSHO Co., Ltd.; hereinafter referred to as LM-P) are summarized in Table 1 shown below. The total sugar was measured by phenol-sulfuric acid method, the uronic acid was measured by Blumenkrantz method and the esterification degree (DE) was measured by a titration method, and they were represented as a % mole based on the uronic acid.

**Table 1: Analytical data of potato pectin obtained under different extracting conditions.**

| | (A) | (B) | (C) | (D) | (E) | (LM-P) |
|---|---|---|---|---|---|---|
| pH before extraction | 4.5 | - | 7.5 | 7.6 | 7.1 | - |
| pH at the end of extraction | 4.2 | - | 6.5 | 5.9 | 6.3 | - |
| Yield (%) | 20 | 18 | 25 | 24 | 17 | - |
| Water (%) | 8.4 | 7.9 | 9.2 | 7.5 | 8.4 | 4.4 |
| Crude ash (%) | 4.4 | 5.1 | 7.8 | 6.5 | 8.1 | 2.0 |
| Total sugar (%) | 79.5 | 76.1 | 81.6 | 81.7 | 85.9 | 52.3 |
| uronic acids (%) | 53.6 | 52.9 | 52.2 | 51.8 | 43.1 | 43.8 |
| DE (%) | 55.3 | 16.8 | 14.1 | 11.2 | 41.6 | 33.5 |
| Average molecular weight | 132,000 | 131,000 | 356,000 | 330,000 | 254,000 | 270,000 |

The potato pectin (C) and (D) extracted with the chelating agent exhibited higher yields than the potato pectin (A) and (E) extracted without chelating agent. The average molecular weight was also higher, suggesting that they contained large amounts of high molecular weight pectin. While the content of the uronic acid was evenly about 50% regardless of the extracting conditions, the DE of the potato pectin (C) and (D) extracted with the chelating agent was 20% or less, showing levels similar to the demethoxylated potato pectin (B) and lower than LM-P.

### (Test Example 1)

A gel was prepared by the method described below and the gel strength was measured using an Instron testing machine (Instron Japan Co., Ltd.). As a comparative control, a gel was prepared using LM-P. To 12 parts of powdered skim milk was added and dispersed 88 parts of water, and the mixture was sterilized with stirring for 15 minutes at 90 to 95°C, whereby obtaining aqueous solution of skim milk. Each 2 parts of the potato pectin (A) to (E) or LM-P was added to and dissolved in 98 parts of hot water with stirring at 80°C for 20 minutes. Equal amounts of the aqueous solution of skim milk and the pectin solution were mixed while being heated at 80°C or higher, and dispensed into a container so as to be the thickness of 1.75 cm, which was allowed to stand at room temperature for 1 hour and in a refrigerator for 12 hours, and then the gel strength was measured. The gel strength was measured using the Instron machine with a rounded plunger (ϕ 5mm) at the crosshead speed of 60 mm/min at room temperature of 23°C. The product of the measurement values of the breaking load and the breaking displacement for 10 samples was assessed as the gel strength.

The results of the assessment were represented in Table 2 shown below.

**Table 2: Gel properties of potato pectin obtained under different extracting conditions**

| | (A) | (B) | (C) | (D) | (E) | (LM-P) |
|---|---|---|---|---|---|---|
| Breaking load (gf) | - | - | 30 | 23 | 2 | 2 |
| Breaking displacement (mm) | - | - | 6 | 6 | 6 | 9 |
| Gel strength (gf·mm) | - | - | 180 | 138 | 12 | 18 |

| | | | | | | |
|---|---|---|---|---|---|---|
| -:Non-measurable due to no gelling | | | | | | |

As shown in Table 2, the potato pectin (C) and (D) extracted using the chelating agent exhibited the breaking strengths not lower than that of LM-P and formed firm gels. On the other hand, the potato pectin (A) which was extracted under weakly acidic conditions and its demthoxylated form (B) having a low esterification degree did not form gels. The potato pectin (E) extracted only with the pH buffering agent without the chelating agent formed a gel, however the gel strength thereof was as low as that of LM-P.

### (Production Examples F to J) Preparation of potato pectin at different extracting temperatures

### Preparation Example of potato pectin (F)

A potato pectin (F) was obtained similarly to the preparation of potato pectin (C) except for the extracting temperature at 130°C. The yield of the potato pectin based on the raw material was 23%.

### Preparation Example of potato pectin (G)

A potato pectin (G) was obtained similarly to the preparation of potato pectin (C) except for the extracting temperature at 100°C and the extracting time for 180 minutes. The yield of the potato pectin based on the raw material was 21%.

### Preparation Example of potato pectin (H)

A potato pectin (H) was obtained similarly to the preparation of potato pectin (C) except for the extracting temperature at 80°C and the extracting time for 180 minutes. The yield of the potato pectin based on the raw material was 13%.

### Preparation Example of potato pectin (I)

A potato pectin (I) was obtained similarly to the preparation of potato pectin (C) except for the extracting temperature at 70°C and the extracting time for 180 minutes. The yield of the potato pectin based on the raw material was 11%.

### * Preparation Example of potato pectin (J)

A potato pectin (J) was obtained similarly to the preparation of potato pectin (C) except for the extracting temperature at 50°C and the extracting time for 180 minutes. The yield of the potato pectin based on the raw material was 3%.

### (Test Example 2)

Similarly to Test Example 1, a gel was prepared and the gel strength was measured using the Instron machine. As a comparative control, a gel was prepared using LM-P.

The analytical values and the results of Test Example 2 are represented in Table 3 shown below.

**Table 3: Yields and gel strengths of potato pectin obtained at different extracting temperature**

| | (F) | (C) | (G) | (H) | (I) | (J) | (LM-P) |
|---|---|---|---|---|---|---|---|
| pH before extraction | 7.4 | 7.5 | 7.4 | 7.4 | 7.4 | 7.4 | - |
| pH at the end of extraction | 6.3 | 6.5 | 6.9 | 7.0 | 7.0 | 7.1 | - |
| Extracting temperature (°C) | 130 | 120 | 100 | 80 | 70 | 50 | - |
| Extracting time (hours) | 1 | 1 | 3 | 3 | 3 | 3 | - |
| Yield (%) | 23 | 25 | 21 | 13 | 11 | 3 | - |
| Uronic acids (%) | 41.1 | 52.2 | 50.1 | 59.9 | 45.5 | 20.2 | 43.8 |
| Average molecular weight | 232,000 | 356,000 | 321,000 | 350,000 | 246,000 | 27,000 | 270,000 |
| Breaking load (gf) | 3 | 30 | 31 | 42 | 35 | 2 | 2 |
| Breaking displacement (mm) | 6 | 6 | 6 | 4 | 5 | 4 | 9 |
| Gel strength (gf·mm) | 18 | 180 | 186 | 168 | 175 | 8 | 18 |

As shown in Table 3, the potato pectin extracted at a temperature of 80°C or lower exhibited the low yield of 15% or lower. The potato pectin extracted at 50°C had a low average molecular weight and a low value of the uronic acid content. The potato pectin extracted at a temperature of 70°C to 120°C exhibited the breaking strengths not lower than that of LM-P and formed firm gels. As a condition for obtaining a firm gel at a sufficient yield, the extraction with heating at 90°C to 125°C was required.

### (Production Examples K to N) Preparation of potato pectin at different extracting pH

### Preparation Example of potato pectin (K)

A potato pectin (K) was obtained similarly to the preparation of potato pectin (C) except for using a 53 mM (final 50 mM) aqueous solution of disodium hydrogenphosphate, adjusting at pH 3.5 with hydrochloric acid, extracting with heating for 180 minutes at 100°C, followed by neutralization at pH6 with 30% sodium hydroxide. The yield of the potato pectin based on the raw material was 6%.

### Preparation Example of potato pectin (L)

A potato pectin (L) was obtained similarly to the preparation of potato pectin (C) except for using a 53mM (final 50mM) aqueous solution of disodium hydrogenphosphate, adjusting at pH 5.0 with hydrochloric acid, and extracting for 180 minutes at 100°C. The yield of the potato pectin based on the raw material was 10%.

### Preparation Example of potato pectin (M)

A potato pectin (M) was obtained similarly to the preparation of potato pectin (C) except for using a 53 mM (final 50 mM) aqueous solution of disodium hydrogenphosphate, adjusting at pH 10 with 30% sodium hydroxide, extracting for 180 minutes at 100°C, followed by neutralization at pH6 with hydrochloric acid. The yield of the potato pectin based on the raw material was 24%.

### Preparation Example of potato pectin (N)

A potato pectin (N) was obtained similarly to the preparation of potato pectin (C) except for using a 53 mM (final 50 mM) aqueous solution of disodium hydrogenphosphate, adjusting at pH 12 with 30% sodium hydroxide, extracting for 180 minutes at 100°C, followed by neutralization at pH 6 with hydrochloric acid. The yield of the potato pectin based on the raw material was 17%.

### (Test Example 3)

Similarly to Test Example 1, a gel was prepared and the gel strength was measured using the Instron machine. A comparative control gel was also prepared.

The analytical values and the results of Test Example 3 are represented in Table 4 shown below.

**Table 4: Yields and gel strengths of potato pectin obtained at different extracting pH**

| | (K) | (L) | (M) | (N) | (LM-P) |
|---|---|---|---|---|---|
| pH before extraction | 3.5 | 5.0 | 10.0 | 12.0 | - |
| pH at the end of extraction | 3.4 | 4.9 | 9.3 | 11.7 | - |
| Extracting temperature (°C) | 100 | 100 | 100 | 100 | - |
| Extracting time (hours) | 3 | 3 | 3 | 3 | - |
| Yield (%) | 6 | 10 | 24 | 17 | - |
| Uronic acids (%) | 63.0 | 58.1 | 44.5 | 35.4 | 43.8 |
| Average molecular weight | 22,000 | 198,000 | 321,000 | 142,000 | 270,000 |
| Breaking load (gf) | 1 | 5 | 17 | 1 | 2 |
| Breaking displacement (mm) | 9 | 6 | 6 | 8 | 9 |
| Gel strength (gf·mm) | 9 | 30 | 102 | 8 | 18 |

As shown in Table 4, the potato pectin having a pH of 5 or lower at the end of the extraction exhibited poor yields and low gel strength values. The potato pectin (N) extracted at about pH12 exhibited a slightly lower yield of 17% and a poor gel strength. As a condition for obtaining a firm gel at a sufficient yield, the extraction at pH 5.5 to pH11 is required.

### (Production Examples O to S) Extraction using chelating agent in combination with pH buffering agent

### Preparation Example of potato pectin (O)

A potato pectin (O) was obtained similarly to the preparation of potato pectin (D) except for extracting with 11 mM (final 10 mM) trisodium citrate. The pH at the end of the extraction was 5.2. The yield of the potato pectin based on the raw material was 17%.

### Preparation Example of potato pectin (P)

A potato pectin (P) was obtained similarly to the preparation of potato pectin (D) except for extracting with 95 parts of a 11 mM (final 10 mM) aqueous solution of trisodium citrate containing 11 mM (final 10 mM) sodium hydrogen carbonate. The pH at the end of the extraction was 5.8. The yield of the potato pectin based on the raw material was 21%.

### Preparation Example of potato pectin (Q)

A potato pectin (Q) was obtained similarly to the preparation of potato pectin (D) except for extracting with 95 parts of a 11 mM (final 10 mM) aqueous solution of trisodium citrate containing 32 mM (final 30 mM) sodium hydrogen carbonate. The pH at the end of the extraction was 6.5. The yield of the potato pectin based on the raw material was 22%.

### Preparation Example of potato pectin (R)

A potato pectin (R) was obtained similarly to the preparation of potato pectin (D) except for extracting with 95 parts of a 5.3 mM (final 5 mM) aqueous solution of trisodium citrate. The pH at the end of the extraction was 5.1. The yield of the potato pectin based on the raw material was 11%.

### Preparation Example of potato pectin (S)

A potato pectin (S) was obtained similarly to the preparation of potato pectin (D) except for extracting with 95 parts of a 5.3 mM (final 5 mM) aqueous solution of trisodium citrate containing 42 mM (final 40mM) sodium hydrogen carbonate. The pH at the end of the extraction was 7.1. The yield of the potato pectin based on the raw material was 22%.

### (Test Example 4)

Similarly to Test Example 1, a gel was prepared and the gel strength was measured using the Instron machine. As a comparative control, a gel was prepared using LM-P. The results of the assessment are represented in Table 5 shown below.

**Table 5: Yields and gel properties of potato pectin in combination with pH buffering agent**

| | (D) | (O) | (P) | (Q) | (R) | (S) | (LM-P) |
|---|---|---|---|---|---|---|---|
| 3Na citrate (mM) | 50 | 10 | 10 | 10 | 5 | 5 | - |
| Na hydrogen carbonate (mM) | 0 | 0 | 10 | 30 | 0 | 40 | - |
| pH before extraction | 7.6 | 6.1 | 6.3 | 6.7 | 5.6 | 7.4 | - |
| pH at the end of extraction | 5.9 | 5.2 | 5.8 | 6.5 | 5.1 | 7.1 | - |
| Yield (%) | 24 | 17 | 21 | 22 | 11 | 22 | - |
| Breaking load (gf) | 23 | 8 | 21 | 23 | 1 | 20 | 2 |
| Breaking displacement (mm) | 6 | 6 | 6 | 6 | 6 | 6 | 9 |
| Gel strength (gf·mm) | 138 | 48 | 126 | 138 | 6 | 120 | 18 |

As shown in Table 5, the potato pectin extracted with chelating agent alone exhibited lower yields and lower gel strength values when added amount is reduced. On the other hand, the combination of the chelating agent with the pH buffering agent could retain a pH of 5.5 or higher at the end of the extraction, and potato pectin forming firm gels could be obtained in which the gel strengths were 100 gf·mm or higher. The extraction only with the chelating agent, since it requires a large amount of the chelating agent, needs to be subjected to removing treatment of the excessive chelating agent after the extraction. On the other hand, since the combination with the pH buffering agent can reduce concentration of the chelating agent in the system, there is a possibility that the purification step will be simplified, whereby being advantageous in an industrial manufacturing.

### (Example 1) Heat resistant jam prepared using potato pectin

Using the formulations and methods shown below, jams were prepared. As a gelling agent, the potato pectin (C) or (D), or LM-P as a comparative control, were employed.

The raw materials shown in Table 6-A were mixed and heated to 90°C for dissolving sugar. In the raw materials shown in Table 6-B, pectin was added to hot water adjusted at 80°C and was dissolved completely with a mixer, and then the resultant was added to A prepared previously. The mixture solution was then adjusted at a temperature of 80°C, and a solution of citric acid was added to the mixture solution to blend completely. The mixture was cooled to 60°C, dispensed into containers, and cooled to be solidified.

**Table 6: Jam formulation**

| | | |
|---|---|---|
| A | Fruit | 40 Parts |
| | Water | 40 Parts |
| | Sugar | 6 Parts |
| B | Gelling agent | 1 Part |
| | Water | 18 Parts |
| C | Citric acid (50% solution) | 0.7 Part |

The jam prepared with the control LM-P turned readily into a solution by heating at 80°C for 10 minutes, exhibiting no heating resistance. On the other hand, the jam prepared with the potato pectin (C) and (D) did not cause melting or water separation even when being heated under the same conditions, and was highly heat-resistant jam.

### Industrial Applicability

Potato pectin having a potent gelling effect can efficiently be obtained by means of effective utilization of potato starch pulp (dregs) which is a waste. By this pectin, a gelatinous food which is firm and has an excellent heating stability can be prepared.

## Claims

1. A process for producing pectin comprising extracting it from white potato starch pulp with a chelating agent selected from a group consisting of free phosphoric acid and salt thereof and organic acid and salt thereof at a temperature of 90°C to 125°C under such conditions that pH at the completion of the extraction is 5.5 to 11, wherein starch derived from a raw material is degraded by an amylase treatment.

2. The process for producing pectin according to Claim 1, wherein a pH buffer is added when the extraction is carried out.

3. The process for producing pectin according to Claim 1 or 2, further comprising precipitating the pectin with a polar organic solvent for purification of the pectin.

4. The process for producing pectin according to Claim 3, wherein the extraction is carried out using a chelating agent exhibiting a potent chelating ability at pH 5 or higher and losing the chelating ability at pH 3 or lower, the resultant pectin is precipitated with a polar organic solvent, and the chelating agent is removed from the precipitate using a mineral acid-supplemented polar organic solvent.

5. A gelling agent comprising the pectin obtainable by the process according to any one of Claims 1 to 4 as an active component.

6. A gelatinous food obtainable by using the gelling agent according to Claim 5.

## Patentansprüche

1. Verfahren zur Herstellung von Pektin, umfassend das Extrahieren hiervon aus Kartoffelstärke-Pulpe mit einem Chelatbildner, ausgewählt aus der Gruppe bestehend aus freier Phosphorsäure und Salzen hiervon und organischen Säuren und Salzen hiervon, bei einer Temperatur von 90°C bis 125°C unter solchen Bedingungen, dass der pH-Wert bei der Vollendung der Extraktion 5,5 bis 11 beträgt, worin aus einem Ausgangsmaterial erhaltene Stärke durch eine Amylasebehandlung abgebaut wird.

2. Verfahren zur Herstellung von Pektin gemäß Anspruch 1, worin ein pH-Puffer zugefügt wird, wenn die Extraktion durchgeführt wird.

3. Verfahren zur Herstellung von Pektin gemäß Anspruch 1 oder 2, ferner umfassend das Ausfällen des Pektins mit einem polaren organischen Lösungsmittel zur Reinigung des Pektins.

4. Verfahren zur Herstellung von Pektin gemäß Anspruch 3, worin die Extraktion unter Verwendung eines Chelatbildners durchgeführt wird, der bei pH 5 oder höher eine ausgeprägte Chelat-bildende Fähigkeit zeigt und die Chelat-bildende Fähigkeit bei pH 3 oder niedriger verliert, das resultierende Pektin mit einem polaren organischen Lösungsmittel ausgefällt wird und der Chelatbildner aus der Ausfällung unter Verwendung eines polaren organischen Lösungsmittels, dem Mineralsäure zugesetzt worden ist, entfernt wird.

5. Geliermittel, umfassend das Pektin, das durch das Verfahren gemäß irgendeinem der Ansprüche 1 bis 4 erhältlich ist, als eine aktive Komponente.

6. Gelartiges Nahrungsmittel, erhältlich unter Verwendung des Geliermittels gemäß Anspruch 5.

## Revendications

1. Procédé de production de pectine comprenant l'extraction de celle-ci d'une pâte d'amidon de pomme de terre avec un agent de chélation choisi dans un groupe constitué d'acide phosphorique libre et d'un sel de celui-ci et d'un acide organique et d'un sel de celui-ci à une température de 90°C à 125°C dans des conditions telles que le pH à la fin de l'extraction est de 5,5 à 11, dans lequel de l'amidon dérivé d'une matière première est dégradé par un traitement d'amylase.

2. Procédé de production de pectine selon la revendication 1, dans lequel un tampon de pH est ajouté lorsque l'extraction est réalisée.

3. Procédé de production de pectine selon la revendication 1 ou 2, comprenant de plus la précipitation de la pectine avec un solvant organique polaire pour la purification de la pectine.

4. Procédé de production de pectine selon la revendication 3, dans lequel l'extraction est réalisée en utilisant un agent de chélation présentant une aptitude de chélation puissante à pH 5 ou supérieur et perdant l'aptitude de chélation à pH 3 ou inférieur, la pectine résultante est précipitée avec un solvant organique polaire, et l'agent de chélation est éliminé du précipité en utilisant un solvant organique polaire additionné d'un acide minéral.

5. Agent gélifiant comprenant la pectine pouvant être obtenu par le procédé selon l'une quelconque des revendications 1 à 4 comme un constituant actif.

6. Aliment gélatineux pouvant être obtenu en utilisant l'agent gélifiant selon la revendication 5.
